# EUROPÄISCHE PATENTSCHRIFT

(11) **EP 2 106 229 B1**
(45) Veröffentlichungstag und Bekanntmachung des Hinweises auf die Patenterteilung: **20.10.2010**
(21) Anmeldenummer: 07847246.1
(22) Anmeldetag: 21.11.2007
(51) Int. Cl.: A47J 31/46, A47J 31/36

(54) **SICHERHEITSVENTIL FÜR EINE BRÜHGETRÄNKEMASCHINE**
SAFETY VALVE FOR A MACHINE FOR PREPARING BREWED DRINKS
SOUPAPE DE SÉCURITÉ POUR UNE MACHINE DE PRÉPARATION DE BOISSONS PAR PERCOLATION

(30) Priorität: 21.12.2006 DE 102006060746
(43) Veröffentlichungstag der Anmeldung: 07.10.2009
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, 3333 Ljubno Ob Savinji (SI); SEDOVSEK, Aleksander, 3330 Mozirje (SI); ZIBRET, Igor, 3327 Smartno Ob Paki (SI)
(86) Internationale Anmeldenummer: PCT/EP2007/062615
(87) Internationale Veröffentlichungsnummer: WO 2008/077693

(56) Entgegenhaltungen:
- US-A- 5 388 502

## Beschreibung

Die Erfindung betrifft eine Brühgetränkemaschine mit einer Brühkammer zum Beladen mit Getränkesubstratportionen und mit einem Wasserzulauf für eine druckbeaufschlagte Wasserzufuhr in die Brühkammer, der derart in die Brühkammer gerichtet ist, dass er bei einer vorzeitigen Öffnung der Brühkammer zumindest indirekt in einen Benutzerbereich der Maschine spritzt. Der Benutzerbereich ist derjenige Raum vor der Getränkemaschine, in dem sich der Benutzer bei der Betätigung der Maschine normalerweise aufhält. Besonders geschützt werden sollte ein oberer Benutzerbereich, in dem sich Gesicht und Hände des Benutzers befinden.

Getränkesubstratportionen sind zum Beispiel als Kaffeepads oder Kaffeekapseln aus Aluminium im Handel verbreitet. Die Benutzer öffnen dazu die Brühkammer, setzen die Getränkeportionen ein und verschließen die Brühkammer wieder. Dann werden die Getränkeportionen mit heißem Wasser beaufschlagt. Das Heißwasser steht in der Regel unter Druck. Es sind daher Sicherheitsvorkehrungen zu treffen, damit der Benutzer bei einer Fehlfunktion durch das Heißwasser nicht verletzt wird. Dafür werden in der Regel Überdruckventile angeordnet, wie sie zum Beispiel die EP 1 690 482 A2 offenbart. Es ist außerdem aus der DE 10 2004 004 833 A1 bekannt, Sicherheitsschalter an der Brühkammer einzubauen, die einen Betrieb der Getränkemaschine bei geöffneter Brühkammer durch Abschalten der Heizung und/oder Fördereinrichtung verhindern. Ferner ist aus der US 5,388,502 eine Espressomaschine mit einem in einer Wasserleitung angeordneten Ventil bekannt, das bei nicht eingesetztem Siebkorbträber stets geschlossen ist.

Diese Maßnahmen können aber zum Beispiel bei einer Getränkemaschine mit einem aufwärts in die Brühkammer gerichteten Wasserzulauf, wie sie die EP 1 440 910 A1 offenbart, ungenügend sein. Wenn sie nur leicht verzögert ansprechen, können Verletzungen des Bedieners, wenn er die Brühkammer vorzeitig öffnet, nicht weitgehend ausgeschlossen werden.

Aufgabe der vorliegenden Erfindung ist es, eine Sicherheitseinrichtung anzugeben, die eine Verletzung des Benutzers bei einem vorzeitigen Öffnen der Brühkammer verhindert.

Diese Aufgabe wird bei einer Brühgetränkemaschine der eingangs genannten Art erfindungsgemäß durch ein Sicherheitsventil gelöst, das bei offener bzw. schon bei sich öffnender Kammer aktiviert ist und den Wasserzulauf in die Brühkammer sofort verhindert, indem das aktivierte Sicherheitsventil bei offener Brühkammer einen Abzweig im Wasserzulauf zur Umgehung der Brühkammer freigibt. Eine Verletzung eines Bedieners durch austretendes heißes Wasser oder Dampf, die ihm anderenfalls etwas wegen eines im entgegen gerichteten Wasserzulaufs aus der Brühkammer unmittelbar entgegenströmen würden, ist damit zuverlässig und vollständig ausgeschlossen.

Bei Brühgeräten mit Boiler oder Thermoblocks zur Erhitzung des Wassers genügt es dazu in der Regel, eine Pumpe zur Förderung des Wassers aus der Heizeinrichtung in die Brühkammer abzuschalten. Bei Brühgeräten mit einem Durchlauferhitzer dagegen liegt an der Wärme übertragenden Kontaktfläche zwischen dem Erhitzer und dem zu erhitzenden Wasser ein höheres Temperaturniveau vor. Der Erhitzer setzt das Wasser durch die Erwärmung auf oder über Dampftemperatur zusätzlich unter Druck. Ein bloßes Abschalten der Pumpe zur Vermeidung eines Dampfaustritts genügt also nicht. Die Erfindung verfolgt daher das Prinzip, das austretende heiße Wasser oder den Dampf nicht unkontrolliert in die Brühkammer einströmen und damit aus dem Gerät austreten zu lassen, sondern schon den Zustrom in die Brühkammer zu verhindern. Unter "Verhinderung" soll dabei jede Maßnahme zu verstehen sein, die einen Zustrom von Wasser oder Dampf in die Brühkammer unterbindet. Das kann durch ein Blockieren des Wasserzulaufs ebenso geschehen wie durch ein Ableiten oder Umleiten.

Nach einer vorteilhaften Ausgestaltung der Erfindung kann das aktivierte Sicherheitsventil beim Öffnen der Brühkammer eine weitere Zufuhr von heißem Wasser oder druckbeaufschlagtem Dampf in die Brühkammer vollständig sperren. Damit ist jedenfalls sichergestellt, dass der Benutzer sich nicht an brühheißem Wasser oder Dampf verletzen kann.

Bei einem Sperren des Wasserzulaufs bei vorzeitiger Öffnung der Brühkammer kann ein Überdruck in der Brühgetränkemaschine entstehen. Überschreitet er einen zulässigen maximalen Schwellwert, so kann er ein Überdruckventil in der Getränkemaschine auslösen. Überdruckventile sind in der Regel ohnehin vorhanden und verhindern generell, dass eine Brühgetränkemaschine in Folge einer Fehlbedingung oder Fehlfunktion der Heizeinrichtung bzw. Pumpe Schaden nimmt. Das Auslösen des Überdruckventils kann für den Benutzer jedoch den Eindruck erwecken, dass die Maschine beschädigt worden sei. Erfindungsgemäß weist Wasserzulauf einen Abzweig auf, der eine Umgehung der Brühkammer ermöglicht und den das aktivierte Sicherheitsventil freigibt. Dadurch kann zumindest ein Teil des austretenden Wassers oder Dampfs von der Brühkammer ferngehalten, ein Überdruck entspannt und so das Ansprechen des Überdruckventils vermieden und die Verletzungsgefahr des Benutzers verringert werden.

Der abgeleitete Anteil des heißen und druckbeaufschlagten Wassers oder Dampfs - im Folgenden der Einfachheit halber: des Fluids - kann dadurch erhöht werden, dass der Strömungswiderstand des Abzweigs geringer aufgebildet ist als der des Wegs in die Brühkammer. Eine einfache Möglichkeit dafür bietet die Wahl der Leitungsdurchmesser. Der Durchmesser des Abzweigs kann deutlich größer gewählt werden als der für die Wasserzufuhr in die Brühkammer. Sobald also das Sicherheitsventil den Weg in den Abzweig freigibt, strömt das Fluid entlang des geringeren Widerstands, das heißt im Wesentlichen in den Abzweig und damit nicht in die Brühkammer. Je größer der Unterschied der Durchmesser zwischen dem Abzweig und dem Brühkammerzulauf ausfällt, umso vollständiger wird das Fluid in den Abzweig strömen.

Der maximale Widerstand ist selbstverständlich dann erreicht, wenn das Sicherheitsventil den Zulauf in die Brühkammer vollständig sperrt. Es stellt dann ein "Oder"-Ventil dar, das entweder - nämlich im Normal- oder nicht-aktivierten Zustand - einen Zulauf in die Brühkammer ermöglicht, oder - im aktivierten Zustand - den Abzweig zur Umgehung der Brühkammer freischaltet und das Fluid umleitet.

Nach einer weiteren vorteilhaften Ausgestaltung kann ein Ausgang des Sicherheitsventils mit einem Auslass verbunden sein. Bei seiner Aktivierung - entweder beim Sperren der Wasserzufuhr oder bei deren Umleitung - verbindet das Sicherheitsventil den Wasserzulauf mit dem Auslass, so dass überschüssiges Fluid in den Auslass abgeleitet wird. Der Auslass ist vorteilhaft vom Benutzer weg gerichtet und leitet das überschüssige Fluid für den Benutzer schadlos ab. Er kann also zum Beispiel in einen Wassertank, in eine Tropfenauffangschale oder in den Getränkeauslass und damit in eine am Gerät abgestellte Tasse münden.

Das Sicherheitsventil steht also mit der Brühkammer in einer funktionalen Verbindung, so dass es zumindest bei einem vorzeitigen Öffnen der Brühkammer zuverlässig anspricht. Es kann dazu mit einem Sensor verbunden sein, der einen entsprechenden Zustand der Brühkammer detektiert und das Sicherheitsventil gegebenenfalls auslöst. Nach einer weiteren vorteilhaften Ausgestaltung der Erfindung ist das Sicherheitsventil unmittelbar mit einer Betätigungseinrichtung zum Öffnen und Schließen der Brühkammer gekoppelt. Damit ist die Betätigung des Sicherheitsventils nicht mehr von einer Öffnungs- bzw. Schließstellung der Brühkammer abhängig. Da die Brühkammer ausschließlich über die Betätigungseinrichtung geöffnet oder geschlossen werden kann, führt eine direkte Kopplung des Sicherheitsventils mit der Betätigungseinrichtung zu einer direkteren und früheren Ansprache des Sicherheitsventils schon beim ggf. fehlerhaften Bedienen. Die Aktivierung des Sicherheitsventils erhält dadurch eine höhere Zuverlässigkeit, wodurch sich die Bedienungssicherheit der Brühgetränkemaschine verbessert.

Eine Kopplung des Sicherheitsventils mit der Betätigungseinrichtung kann zum Beispiel über einen Sensor oder einen elektrischen Schalter erfolgen. Nach einer vorteilhaften Ausgestaltung der Erfindung ist das Sicherheitsventil jedoch mechanisch mit der Betätigungseinrichtung gekoppelt, da das Auslösen des Sicherheitsventils damit nicht anfällig für elektronische Störung ist. Außerdem kann es bei einer funktionellen Beeinträchtigung im Allgemeinen leichter repariert werden.

Mündet der Wasserzulauf von unten her in die Brühkammer, strömt das zugeführte Wasser in einer Richtung aufwärts in die Brühkammer ein. Um seine bestimmungsgemäße Funktion jederzeit zu gewährleisten, kann er gegen Verschmutzung, insbesondere gegen Verstopfen, von einem Membranventil abgedeckt sein. Das Membranventil verschließt den Wasserzulauf bei Atmosphärendruck. Der Druck dagegen, mit dem heißes Wasser in die Brühkammer gepumpt wird, öffnet das Membranventil, so dass das heiße Wasser zur Getränkezubereitung in die Brühkammer gelangt. Nach einer weiteren vorteilhaften Ausgestaltung der Erfindung ist das Sicherheitsventil mit dem Membranventil parallel geschaltet. Das druckbeaufschlagte Wasser kann also entweder durch das Membranventil oder durch das Sicherheitsventil abgeleitet werden. Der Pfad des Wassers kann durch jeweils zu überwindende Widerstände zum Öffnen der Ventile festgelegt sein. Da das Membranventil bei geschlossenem Sicherheitsventil den geringeren Widerstand bietet, strömt das heiße Wasser in normalem Betrieb der Brühgetränkemaschine durch das Membranventil in die Brühkammer. Bei gestörtem Betrieb der Brühgetränkemaschine öffnet das Sicherheitsventil. Jetzt bietet der Pfad durch das Sicherheitsventil den geringeren Widerstand, weshalb das heiße Wasser bzw. der Dampf über das Sicherheitsventil in den Auslass strömt. Es ist also nicht einmal erforderlich, dass das Sicherheitsventil den Weg in die Brühkammer aktiv sperrt. Es genügt vollkommen, dass es einen Pfad mit geringerem Widerstand als den durch das Membranventil eröffnet. Auch damit ist ein Abfluss des heißen Wassers oder Dampfs durch die Brühkammer wirksam verhindert.

Nach einer weiteren vorteilhaften Ausgestaltung der Erfindung mündet ein Ausgang des Sicherheitsventils in einen Getränkeausgang der Brühkammer. Der Getränkeausgang aus der Kammer ist in aller Regel senkrecht abwärts und damit nicht auf den Benutzer hin gerichtet. Beim Zubereiten eines Getränkes ist außerdem in aller Regel unter dem Getränkeausgang eine Tasse abgestellt, die die Fluide aus dem Getränkeausgang auffängt. Ein Ablassen des heißen Wassers oder Dampfs aus dem Getränkeausgang der Brühkammer ist somit für den Benutzer in der Regel völlig ungefährlich. Die Kopplung des Ausgangs des Sicherheitsventils mit dem Getränkeausgang aus der Brühkammer ist außerdem aus konstruktionstechnischen Gründen in aller Regel denkbar einfach, weil sich dadurch ein kurzer Weg für die Ableitung im Störungsfall ergibt. Der technische Aufwand zur Ableitung des überschüssigen Wassers oder Dampfs ist also gering, seine Herstellung folglich kostengünstig.

Die mechanische Kopplung zwischen dem Sicherheitsventil und der Betätigungseinrichtung sollte möglichst einfach konstruiert sein, damit sie dauerhaft, zuverlässig und ohne Wartungsaufwand funktioniert. Eine vorteilhafte Ausgestaltung kann daher in einem federbelasteten Schaltglied, zum Beispiel einer Wippe oder einem Schieber bestehen. Bei geschlossener Brühkammer hält es das Sicherheitsventil gegen die Federvorspannung geschlossen, indem es sich an der Betätigungseinrichtung als Widerlager abstützt. Bei geöffneter Brühkammer fehlt das Widerlager, die Feder drückt das Sicherheitsventil in seine Öffnungsstellung.

Die geschlossene Stellung des Sicherheitsventils wird also durch eine Federvorspannung erzeugt. Sie stellt eine Gegenkraft zu der Druckbelastung des heißen Wassers oder Dampfs dar, die im Betrieb auf dem Sicherheitsventil lastet. Versagt ein Bauteil in der Kette von Bedienungseinrichtung und Schaltglied zur Bedienung des Sicherheitsventils, so fällt in der Regel das Widerlager für die Federkraft weg. Die Schließkraft kann dann nicht mehr zuverlässig aufgebracht werden, das Sicherheitsventil öffnet. Bei einer Störung des Sicherheitsventils oder seiner mechanischen Kopplung mit der Betätigungseinrichtung kann also der Benutzer keinen Schaden nehmen. Diese Ausgestaltung der mechanischen Kopplung gewährleistet die Sicherheit des Benutzers demnach auch dann, wenn die mechanische Kopplung beschädigt sein sollte. Dadurch wird die Bedienungssicherheit der Brühgetränkemaschine weiter gesteigert.

Das Prinzip der Erfindung wird im Folgenden anhand einer Zeichnung beispielshalber noch näher erläutert. In der Zeichnung zeigen:
- Figur 1: eine perspektivische Ansicht eines Brühkopfes einer Getränkemaschine,
- Figur 2: eine perspektivische Ansicht des Brühkopfes von seiner Unterseite her, und
- Figur 3: eine schematische Schnittdarstellung der Ansicht gemäß Figur 2.

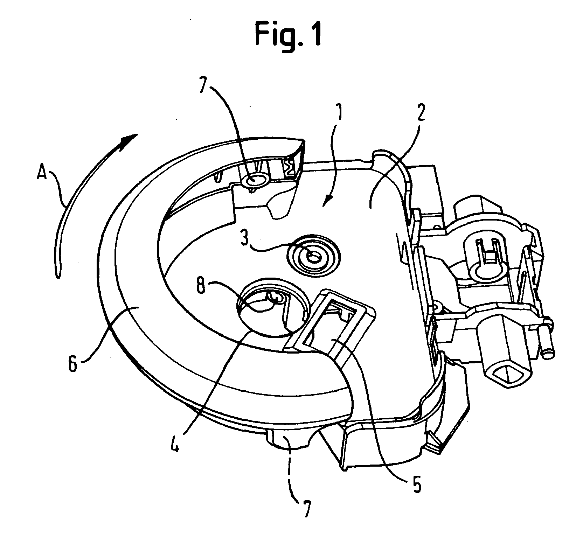

In Figur 1 ist ein Brühkopf einer Mehrgetränkemaschine dargestellt, der den Unterteil einer Brühkammer 1 bildet. Die Brühkammer 1 wird nach unten von einem Kammerboden 2 begrenzt, in dem zentral ein Getränkeauslass 4, in der Darstellung rechts oben davon ein Membranventil 3 und darunter ein Auslesefenster 5 angeordnet sind. Im eingebauten Zustand ist die linke Seite des Brühkopfes einem Benutzer zugewandt. Dort verläuft ein halbkreisförmig gebogener Hebel 6 als Betätigungseinrichtung der Brühgetränkemaschine. Er ist in Buchsen 7 schwenkbar gelagert, so dass er in der Pfeilrichtung A um ca. 90 Grad nach oben geschwenkt werden kann. Dadurch öffnet sich die Brühkammer 1, so dass sie dem Benutzer zur Beladung mit einer Getränkeportion zugänglich ist.

Nachdem eine Getränkeportion in die Brühkammer 1 eingesetzt worden ist und diese mittels Hebel 6 verschlossen wurde, kann die Getränkezubereitung in Gang gesetzt werden. Auf der Unterseite der Getränkeportion ist ein Strichcode angebracht, der über das Auslesefenster 5 erfasst wird und Steuerungsdaten für die Getränkemaschine angibt. Eine nicht dargestellte Anstichvorrichtung öffnet die Getränkeportion. Brühheißes Wasser, das durch das Membranventil 3 in die Brühkammer 1 eingeleitet wird, führt zu einem zubereiteten Getränk, das die Brühkammer 1 über den Getränkeauslauf 4 in eine bereitgestellte Tasse verlässt. Durch den Getränkeauslauf 4 hindurch ist eine Öffnung 9 eines Abzweigs 8 zu erkennen, auf den später näher eingegangen wird.

Das Wasser für die Getränkezubereitung gelangt durch das Membranventil 3 vom Kammerboden 2 aus aufwärts strömend in die Brühkammer 1. Ist die Brühkammer 1 infolge einer Fehlbedienung des Benutzers nicht verschlossen, besteht ohne die im Folgenden erläuterten erfinderischen Gegenmaßnahmen die Gefahr, dass er sich an austretendem heißen Wasser oder Dampf verletzt.

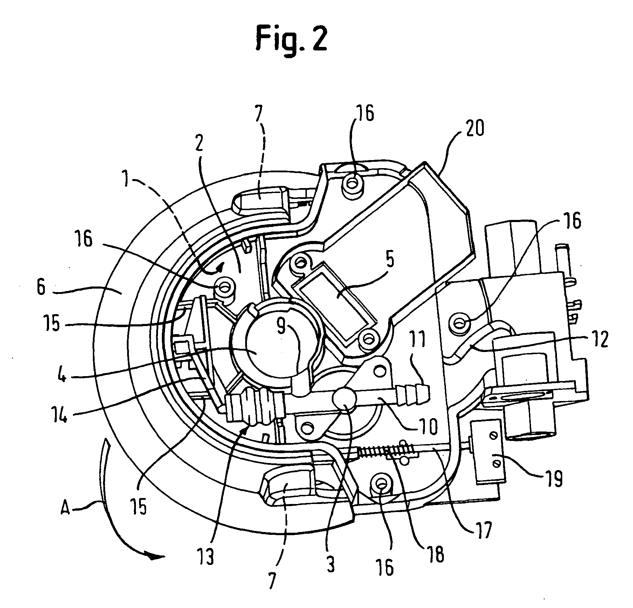

Figur 2 bietet eine Ansicht auf die Unterseite des Brühkopfes 1 gemäß Figur 1. Er ist um eine Längsachse gedreht, so dass sich der Hebel 6 weiterhin auf der linken Seite befindet. Seine Bedienung entlang der Richtung des Pfeils A erfolgt jetzt in der Betrachtungsrichtung aus der Bildebene heraus und nach unten. In der Bildmitte befindet sich weiterhin der Getränkeauslass 4, bezüglich dessen sich jetzt rechts oben das Auslesefenster 5 in einer Ausleseeinheit 20 und rechts unten das Membranventil 3 befindet.

Das Membranventil 3 erhält seine Wasserzufuhr über einen Wasserzulauf 10, der mit einem widerhakenförmig gerippten Mundstück 11 ausgestattet ist, auf den ein flexibler Schlauch aufgeschoben werden kann. Er läuft durch eine Schlauchführung 12 in das Innere der Getränkemaschine. Stromab des Membranventils 3 mündet der Wasserzulauf 10 in ein Sicherheitsventil 13. Zwischen dem Sicherheitsventil 13 und dem Membranventil 3 zweigt von Wasserzulauf 10 der Abzweig 8 ab, der unterhalb des Getränkeauslasses 4 in einer Öffnung 9 endet.

An dem dem Wasserzulauf 10 gegenüberliegenden Ende des Sicherheitsventils 13 ist ein Schieber 14 angeschlossen. Er liegt gleitend auf zwei Führungsrippen 15 auf, die mit zwei entsprechenden Führungsrippen an einem nicht dargestellten Deckel zusammenwirken. Dadurch ist der Schieber 14 in einer horizontalen Richtung auf einer Achse zwischen dem Hebel 6 und dem Getränkeauslass 4 linear verschiebbar. Auf der Unterseite des Kammerbodens 2 sind zur Befestigung des nicht dargestellten Deckels vier Buchsen 16 für Befestigungsschrauben angeordnet.

Der Hebel 6 ist über eine Schaltstange 17 außerdem mit einem Mikroschalter 19 verbunden. Beim Öffnen der Brühkammer 1 durch Verschwenken des Hebels 6 in Richtung des Pfeils A drückt eine Feder 18 die Schaltstange 17 nach links. Die Verschiebung der Schaltstange 17 schaltet den Mikroschalter 19. Daran angeschlossen ist die Heizeinrichtung der Brühgetränkemaschine, die sofort beim Öffnen der Brühkammer 1 am Hebel 6 ausgeschaltet wird.

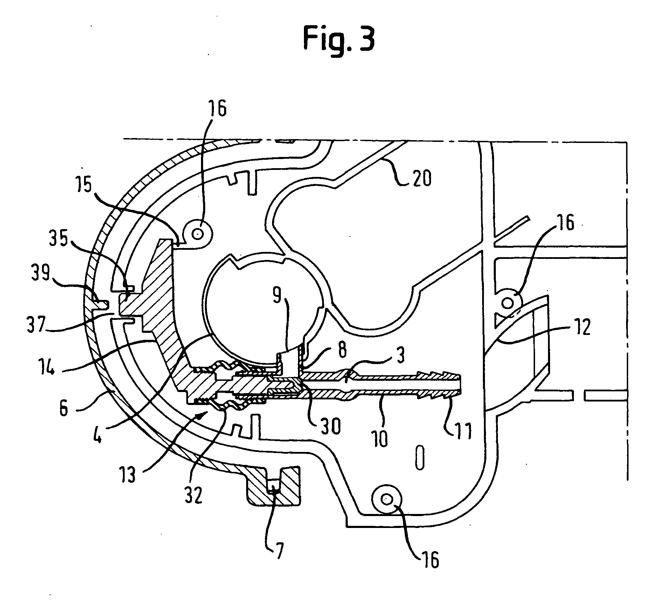

In der vereinfachten Schnittdarstellung der Figur 3 wird die Wirkungsweise des Ventils 13 deutlicher. In dieser Darstellung sind einige Bestandteile des Brühkopfes, die weniger relevant sind, nur noch schematisch dargestellt. Wie auch in Figur 2 grenzt an den Getränkeauslass 4 rechts oben eine Ausleseeinheit 20 an. In den Getränkeauslass 4 mündet der Abzweig 8 aus dem Wasserzulauf 10 mit seiner Öffnung 9. In der Schnittdarstellung des Sicherheitsventils 13 ist das Membranventil 3 nur noch als sich erweiternder Anschluss im Wasserzulauf 10 zu erkennen. Dessen Kopf 11 weist in Richtung der Schlauchführung 12.

Das Sicherheitsventil 13 enthält einen Kolben 30, der den Wasserzulauf 10 vor dem Abzweig 8 absperrt. Der Kolben 30 ist mechanisch mit dem Schieber 14 verbunden und lässt sich nur gemeinsam mit ihm verschieben. Für die Dichtheit und eine Vorspannung des Sicherheitsventils 13 in seiner Öffnungsrichtung, also zur Verschiebung des Kolbens 30 nach links, dient ein Federbalg 32. Er spannt nicht nur den Kolben 30 vor, sondern verschiebt auch den Schieber 14. Dieser umfasst einen Nocken 35, mit dem er in eine Öffnung 37 im Gehäuse des Brühkopfes horizontal verschiebbar gehalten ist. Dem Nocken 35 ist eine Nase 39 am Hebel 6 als Widerlager zugeordnet. Sie ragt in die Öffnung 37 hinein und drückt auf den Nocken 35, sobald der Hebel 6 in der dargestellten Schließstellung, also seiner horizontalen und nicht verschwenkten Lage liegt. Die Nase 39 drückt über den Nocken 35 den Schieber 14 nach rechts und damit gegen die Vorspannung des Federbalgs 32 des Sicherheitsventils 13. Diese dargestellte Lage stellt die Schließstellung des Sicherheitsventils 13 dar, in der Wasser bzw. heißer Dampf über den Wasserzulauf 10 durch das Membranventil 3 in die Brühkammer gelangt.

Sobald nun der Hebel 6 in seiner Öffnungsstellung verschwenkt wird, gleitet die Nase 39 aus der Öffnung 37 heraus. Damit verliert der Nocken 35 sein Widerlager. Der Federbalg 32 schiebt daraufhin den Schieber 14 nach links, der daran durch den Wegfall der Nase 39 nicht mehr gehindert wird. Der Schieber 14 nimmt bei der Verschiebung den Kolben 30 mit. Ebenfalls nach links verschoben gibt der Kolben 30 den Weg aus dem Wasserzulauf 10 in den Abzweig 8 frei. Dieser Weg bietet dem heißen Wasser bzw. Dampf den geringeren Widerstand als das Membranventil 3, weil es ohne Behinderung zur Öffnung 9 strömen kann und nicht den Widerstand der Membran im Membranventil 3 überwinden muss. Das Membranventil 3, dessen Ausgang bei geöffneter Brühkammer in Richtung eines vor der Getränkemaschine stehenden Benutzers gerichtet ist, bleibt also verschlossen. Das heiße Wasser bzw. der Dampf strömt vielmehr durch den Abzweig 8 in den Getränkeauslass 4, der wiederum in eine Tasse oder in eine Tropfenauffangschale mündet. Durch einen Austritt von Wasser oder Dampf unter Überdruck kann also der Benutzer nicht verletzt werden.

Da es sich bei dem vorhergehenden, detailliert beschriebenen Brühkopf um ein Ausführungsbeispiel handelt, kann er in üblicher Weise vom Fachmann in einem weiten Umfang modifiziert werden, ohne den Bereich der Erfindung zu verlassen. Insbesondere kann auch die konkrete Ausgestaltung des Sicherheitsventils in anderer Form als in der hier beschriebenen erfolgen. Ebenso kann die relative Lage von Sicherheitsventil, Auslass, Auslesefenster etc. zueinander innerhalb der Brühkammer in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1 -: Brühkammerboden
- 3 -: Membranventil
- 4 -: Getränkeauslass
- 5 -: Auslesefenster
- 6 -: Hebel
- 7 -: Buchse
- 8 -: Abzweig
- 9 -: Öffnung
- 10 -: Wasserzulauf
- 11 -: Mundstück
- 12 -: Schlauchführung
- 13 -: Sicherheitsventil
- 14 -: Schieber
- 15 -: Führungsrippe
- 16 -: Buchse
- 17 -: Schaltstange
- 18 -: Feder
- 19 -: Mikroschalter
- 20 -: Ausleseeinheit
- 30 -: Kolben
- 32 -: Federbalg
- 35 -: Nocken
- 37 -: Öffnung
- 39 -: Nase

## Patentansprüche

1. Brühgetränkemaschine mit einer Brühkammer (1), die zum Beladen mit Getränkesubstratportionen geöffnet werden kann, einem Wasserzulauf (10) für eine druckbeaufschlagte Wasserzufuhr in die Brühkammer (1), der derart in die Brühkammer (1) gerichtet ist, dass er bei einer vorzeitigen Öffnung der Brühkammer (1) in einen Benutzerbereich der Maschine spritzt, und mit einem Sicherheitsventil (13), das bei offener Brühkammer (1) die Wasserzufuhr in die Brühkammer (1) verhindert, **gekennzeichnet durch** einen Abzweig (8) im Wasserzulauf (10) zur Umgehung der Brühkammer (1), den das aktivierte Sicherheitsventil (13) bei offener Brühkammer (1) freigibt.

2. Getränkemaschine nach Anspruch 1, **dadurch gekennzeichnet, dass** das aktivierte Sicherheitsventil (13) bei offener Brühkammer (1) die Wasserzufuhr in die Brühkammer (1) sperrt.

3. Getränkemaschine nach Anspruch 1 oder 2, **dadurch gekennzeichnet, dass** das aktivierte Sicherheitsventil (13) den Wasserzulauf (10) mit einem Auslass (4) verbindet.

4. Getränkemaschine nach einem der obigen Ansprüche mit einer Betätigungseinrichtung (6) zum Öffnen und Schließen der Brühkammer (1), **dadurch gekennzeichnet, dass** das Sicherheitsventil (13) mit der Betätigungseinrichtung (6) gekoppelt ist.

5. Getränkemaschine nach Anspruch 4, **gekennzeichnet durch** eine mechanische Kopplung.

6. Getränkemaschine nach einem der Ansprüche 1 oder 3 bis 5 mit einem Membranventil (3) zwischen Wasserzulauf (10) und Brühkammer (1), **dadurch gekennzeichnet, dass** es mit dem Sicherheitsventil (13) parallel geschaltet ist.

7. Getränkemaschine nach einem der obigen Ansprüche, **dadurch gekennzeichnet, dass** ein Ausgang des Sicherheitsventil (3) in den Auslass (4) der Brühkammer (1) mündet.

8. Getränkemaschine nach einem der Ansprüche 5 bis 7, **gekennzeichnet durch** eine federbelastetes Schaltelement, das im entspannten Zustand das Sicherheitsventil (13) in seine Öffnungsstellung hält und in der Gegenrichtung **durch** die Betätigungseinrichtung (6) gehalten ist, wenn diese sich in einer Schließstellung befindet.

## Claims

1. Hot drinks machine with a brewing chamber (1), which can be opened for charging with drink substrate portions, a water feed (10) for a pressurised water feed into the brewing chamber (1), which is so directed into the brewing chamber (1) that in the case of premature opening of the brewing chamber (1) it sprays into a user area of the machine, and a safety valve (13) which prevents water feed to the brewing chamber (1) when the brewing chamber (1) is open, **characterised by** a branch (8) in the water feed (10) for bypassing the brewing chamber (1), which frees the activated safety valve (13) when the brewing chamber (1) is open.

2. Drinks machine according to claim 1, **characterised in that** the activated safety valve (13) blocks the water feed to the brewing chamber (1) when the brewing chamber (1) is open.

3. Drinks machine according to claim 1 or 2, **characterised in that** the activated safety valve (13) connects the water feed (10) with an outlet (4).

4. Drinks machine according to any one of the preceding claims with an actuating device (6) for opening and closing the brewing chamber (1), **characterised in that** the safety valve (13) is coupled with the actuating device (6).

5. Drinks machine according to claim 4, **characterised by** a mechanical coupling.

6. Drinks machine according to any one of claims 1 and 3 to 5 with a diaphragm valve (3) between water feed (10) and brewing chamber (1), **characterised in that** it is connected in parallel with the safety valve (13).

7. Drinks machine according to any one of the preceding claims, **characterised in that** an outlet of the safety valve (3) opens into the outlet (4) of the brewing chamber (1).

8. Drinks machine according to any one of claims 5 to 7, **characterised by** a spring-loaded switching element which in the relaxed state holds the safety valve (13) in its open setting and is held in the opposite direction by the actuating device (6) when this is disposed in a closed setting.

## Revendications

1. Machine de préparation de boissons par percolation comprenant une chambre de percolation (1) qui peut être ouverte pour charger des portions de substrats de boissons, une arrivée d'eau (10) pour une amenée d'eau sous pression dans la chambre de percolation (1), laquelle arrivée est orientée de telle manière dans la chambre de percolation (1) qu'elle asperge dans une zone d'utilisateur de la machine lors d'une ouverture prématurée de la chambre de percolation (1), et une soupape de sûreté (13) qui empêche l'amenée de l'eau dans la chambre de percolation (1) lorsque la chambre de percolation (1) est ouverte, **caractérisée par** une bifurcation (8) dans l'arrivée d'eau (10) pour contourner la chambre de percolation (1), la soupape de sûreté activée (13) libérant cette bifurcation lorsque la chambre de percolation (1) est ouverte.

2. Machine de préparation de boissons selon la revendication 1, **caractérisée en ce que** la soupape de sûreté activée (13) bloque l'arrivée d'eau dans la chambre de percolation (1) lorsque la chambre de percolation (1) est ouverte.

3. Machine de préparation de boissons selon la revendication 1 ou 2, **caractérisée en ce que** la soupape de sûreté activée (13) relie l'arrivée d'eau (10) à une sortie (4).

4. Machine de préparation de boissons selon l'une quelconque des revendications ci-dessus, comprenant un dispositif de commande (6) destiné à ouvrir et fermer la chambre de percolation (1), **caractérisée en ce que** la soupape de sûreté (13) est couplée au dispositif de commande (6).

5. Machine de préparation de boissons selon la revendication 4, **caractérisée par** un couplage mécanique.

6. Machine de préparation de boissons selon l'une quelconque des revendications 1 ou 3 à 5, comprenant une soupape à membrane (3) entre l'arrivée d'eau (10) et la chambre de percolation (1), **caractérisée en ce que** cette soupape à membrane est branchée en parallèle avec la soupape de sûreté (13).

7. Machine de préparation de boissons selon l'une quelconque des revendications ci-dessus, **caractérisée en ce qu'**une sortie de la soupape de sûreté (3) aboutit dans la sortie (4) de la chambre de percolation (1).

8. Machine de préparation de boissons selon l'une quelconque des revendications 5 à 7, **caractérisée par** un élément de commutation à ressort, qui, à l'état détendu, maintient la soupape de sûreté (13) dans sa position d'ouverture, et, dans le sens opposé, est maintenu par le dispositif de commande (6) lorsque celui-ci se trouve dans une position de fermeture.
